# EUROPEAN PATENT APPLICATION

(11) **EP 1 324 186 A1**
(43) Date of publication of application: **02.07.2003**
(21) Application number: 01961180.5
(22) Date of filing: 29.08.2001
(51) Int. Cl.: G06F 3/12, H01M 2/02

(54) **PRINTING SYSTEM FOR PRODUCT MARKING**

(30) Priority: 04.09.2000 JP 2000266460
(71) Applicant: MATSUSHITA ELECTRIC INDUSTRIAL CO., LTD., Kadoma-shi, Osaka 571-8501 (JP)
(72) Inventor: IWAIZONO, Yoshinori, Okayama-shi, Okayama 703-8232 (JP); TADA, Futoshi, Osaka-shi, Osaka 536-0014 (JP); SHINBARA, Junichi, Neyagawa-shi, Osaka 572-0004 (JP)
(74) Representative: Rackham, Stephen Neil
(86) International application number: JP0107445
(87) International publication number: WO02021256

(57) **Abstract**

A manufacturer supplies a customer with software for designing a product indication (S1, S11), and then, the customer creates a product indication draft by using the software (S2, S12). The manufacturer conducts a correction to the product indication draft and the like by exchanging information over a communication network (5) (S3, S13), produces a product on which the determined product indication (2) is printed (S6, S16) when the customer approves a sample on which the product indication (2) is printed (S5, S15), and supplies the customer with the products (S7, S17).

## Description

### TECHNICAL FIELD

The present invention relates to a product indication print system for printing a product indication such as a mark, a part number, a notice, and the like displayed on a product such as a battery and a battery pack according to a specification specific to an individual customer supplied with the product.

### BACKGROUND ART

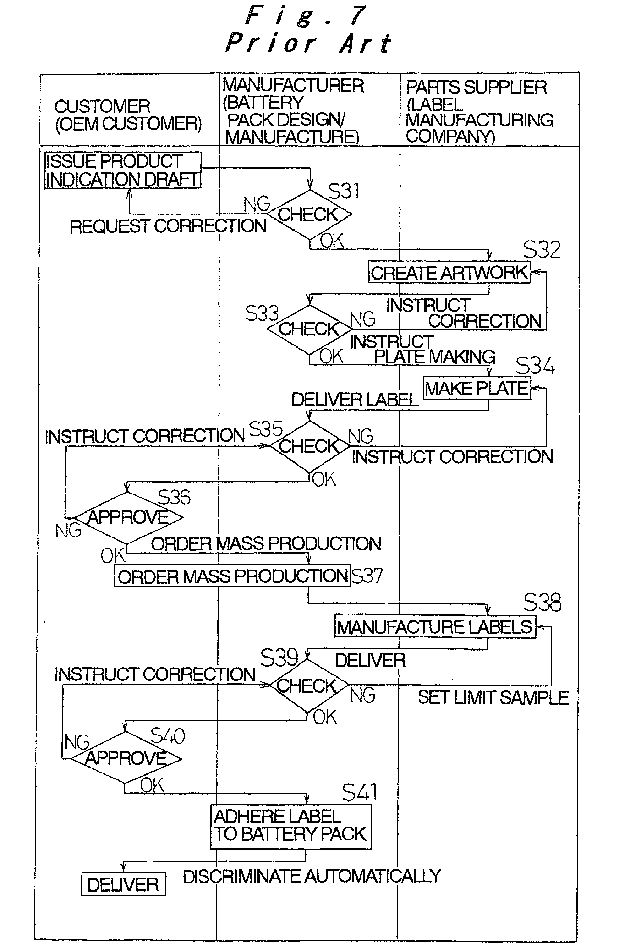

A conventional product indication such as a product name, a part number, a rating, a manufacturer, a notice, and the like appearing on a surface of a product such as a battery and a battery pack is displayed by attaching a label or a nameplate with a print specific to a customer supplied with the product. Fig. 7 shows conventional steps for attaching a product indication specific to a customer on a battery pack (a product). The following section describes the conventional manufacturing process referring to the drawing.

A manufacturer of the battery pack checks a draft of the product indication issued from the customer (S31). In the check here, it is considered whether the draft conforms to a predetermined format, there exits a typographical error or lipography, described contents, and the like cause a problem. If there exists a problem, the manufacturer requests a correction. When the draft no longer includes a problem, the manufacturer sends the draft to a parts supplier, which is a manufacturing company of a label, to manufacture a label. The parts supplier creates an artwork for the product indication (S32), and sends a copy of the artwork to the manufacturer. The manufacturer checks for a shape dimension, a character size, a character pitch, a character font, a typographical error, lipography, and the like (S33). When the artwork no longer includes a problem, the manufacturer instructs the parts supplier to make a plate. The parts supplier makes a plate by using the artwork after receiving the instruction (S34), and sends a label printed tentatively to the manufacturer. The manufacturer checks the label printed tentatively for bleeding, slight touching, a change of color tone, and the like caused by the print (S35). When there is no problem, the manufacturer sends the customer the label printed tentatively, or a battery pack sample to which the label printed tentatively is adhered. The customer gives an approval when the sample does not include a problem, and orders the manufacturer to mass-produce the product indication (S36). The manufacturer accepts the order, and orders the parts supplier to mass-produce the label (S37).

The parts supplier mass-produces the labels, and delivers the labels to the manufacturer (S38). The manufacturer checks for a variation of print state and the like of a large number of the mass-produced labels (S39), presents the parts supplier a limit sample showing a permissible limit of the variations, and simultaneously sends a label which corresponds to the limit sample to the customer for obtaining an approval. When the customer gives an approval (S40), the manufacturer attaches the label on the manufactured battery pack so as to complete the battery pack including the product indication specific to the customer (S41), and delivers the customer with the battery packs.

However, in the conventional print process of the product indication described above, manufacturing the label or the nameplates is subcontracted, and the processes for the artwork and the plate making are also subcontracted. Thus, it is necessary to send a copy of the artwork, and the tentative print for checking in the individual processes, and consequently the manufacturer has to prepare personnel and time for checking, managing the subcontract, and the like. Also, since it necessitates a large number of processes and days to go through the procedure from receiving the product indication draft to adhering the label to the product, there are such problems as increasing the cost and delaying delivery.

An object of the present invention is to provide a product indication print system which allows the manufacturer to print the product indication, and reduces the number of the processes required for the product indication.

### DISCLOSURE OF THE INVENTION

To achieve the object above, a first aspect of the present invention provides a product indication print system for printing a product indication which is presented on a surface of a product, and is specific to an individual customer supplied with the product. In the product indication print system, the customer designs a product indication draft on a computer by using software which is prepared for designing a product indication, and is supplied from a product manufacturer. Then, the manufacturer prints the product indication on the product by using a final product indication draft determined by exchanging information over a communication network. Thus, the individual processes are conducted efficiently by the information exchange over the communication network.

A second aspect of the invention provides a product indication print system for printing a product indication which is presented on a surface of a product, and is specific to an individual customer supplied with the product. In this product indication print system, a manufacturer of the product supplies the customer with software prepared for designing the product indication on a computer. The customer designs a product indication draft on a computer by using the software, and then transmits the draft to the manufacturer over a communication network. Then, the manufacturer determines a final product indication draft by exchanging information over the communication network, produces a product sample on which the product indication is printed by using the final draft, and sends the customer this product sample. When the manufacturer obtains an approval from the customer, the manufacturer manufactures the products on which the product indication is printed, and delivers the product to the customer. As described above, since the software for the design of the product indication draft, and the exchange of the information over the communication network are exploited, and the product sample is presented to the customer before the start of the production, it is possible to efficiently print the product indication specific to the individual supplied customer.

A third aspect of the invention provides a product indication print system for printing a product indication presented on a surface of a product, and specific to an individual customer supplied with the product. In this product indication print system, a manufacturer of the product supplies the customer with software prepared for designing the product indication on a computer. The customer designs a product indication draft on a computer by using the software, and then transmits the draft to the manufacturer over a communication network. The manufacturer determines a final product indication draft by exchanging information over the communication network, produces a limit sample of a state printed by using the final draft, and sends the customer this limit sample. When the manufacturer receives an approval from the customer, the manufacturer manufactures the products on which the product indication is printed, and delivers the product to the customer. As described above, since the software for the design of the product indication draft, and the exchange of the information over the communication network are exploited, and simultaneously the limit sample indicating the limit of the state printed on the product is presented to the customer, it is possible to efficiently print the product indication specific to the individual supplied customer.

In the third aspect, since the limit sample can be sent by transmitting data over the communication network between the manufacturer and the customer, the procedure from the design of the product indication to the determination of the product indication is conducted efficiently.

Additionally, it is possible to prevent damages such as leakage of the information and tampering of the data by security measures such as password authentication, and encryption when the product indication draft is transmitted and received.

Also, since it is possible to transmit information only on a required part along with position information without transmitting entire information on the product indication draft when the draft is transmitted and received, communication time and processing time are reduced by reducing the quantity of information to be transmitted and received.

In addition, it is possible to supply the software by transmitting the software over the communication network, or sending or hand-delivering a recording medium on which the software is recorded.

Further, the software is constituted such that the customer can easily design the product indication by setting positions, spaces, font metrics, and design rules for a fixed part not allowing information entry, and for a design part allowing specific design of the customer.

Additionally, it is possible to print the product indication on the product in-house by melt retransfer such that a reversal image of the product indication is printed on an intermediate transfer film, and then this image is retransferred from the film to the product by a heat roller, and consequently a printed part is finished so as to be covered with a film.

Alternatively, the product indication can be printed directly on the product with non-contact print such as inkjet print.

As products to which the print system is applied, a battery and a battery pack are preferable. Since the battery or the battery pack on which the product indication is printed by using this print system can be delivered to the customer on the same day, it is possible to remarkably reduce the procedure which used to take a considerably long period until the label is determined.

### BRIEF DESCRIPTION OF THE DRAWINGS

Fig. 1 is an external perspective view showing a constitution of a battery pack which is an example of a product;
Figs. 2A and 2B are explanatory views describing a print state of a product indication by intermediate transfer;
Fig. 3 is a drawing of an image showing an example of a base format;
Fig. 4 is a block diagram showing a constitution of a print system;
Fig. 5 is a flowchart showing steps of a print system according to a first embodiment;
Fig. 6 is a flowchart showing steps of a print system according to a second embodiment; and
Fig. 7 is a flowchart showing conventional steps for producing a product indication.

### BEST MODE FOR CARRYING OUT THE INVENTION

Hereinafter, embodiments of the present invention will be described with reference to the accompanying drawings for the sake of understanding of the invention. Incidentally, the embodiment shown below is merely an example of embodiment of the present invention, and by no means intended to limit the technical scope of the invention.

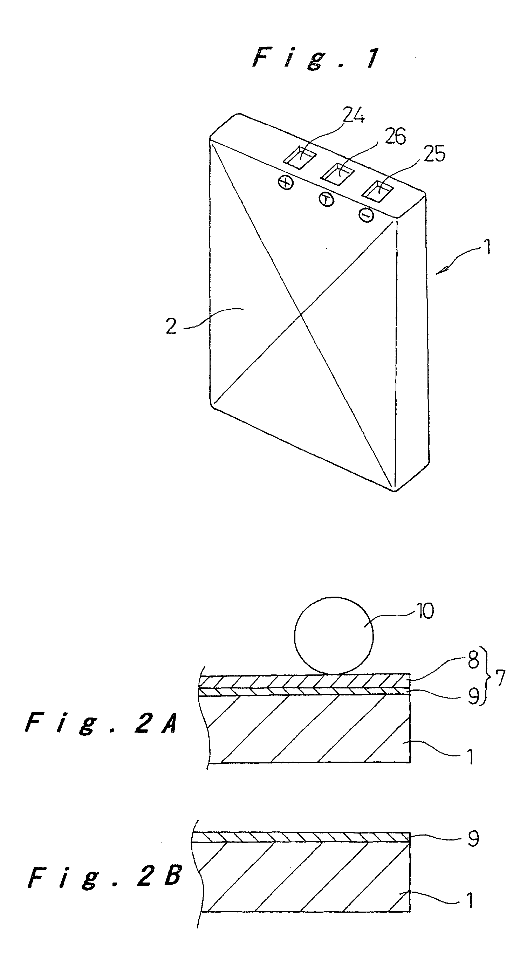

The present embodiment shows examples where a product indication 2 produced by a product indication print system according to the present invention is applied to a battery pack 1 as an example of a product. The battery pack 1 described here is formed as a small flat shape shown in Fig. 1 by storing a rechargeable battery constituted as a flat prismatic lithium ion battery, and a circuit board constituting a battery protection circuit for protecting the rechargeable battery from overcharge, overdischarge, and the like in a pack case made of a resin. A positive input/output terminal 24, a negative input/output terminal 25, and a temperature detection terminal 26 are provided on one end of this battery pack 1, and a label is adhered to a wide surface of the battery pack 1. On the label product indication 2 showing a brand name, a product name, a rating, a notice, and the like of this battery pack 1 in addition to an identification display for the individual terminals are printed.

Since this battery pack 1 is formed as the small flat shape, this battery pack 1 is appropriate for a battery power supply for a portable electronic apparatus and the like. The battery pack 1 is supplied for a maker of an electronic apparatus based on an OEM contract and the like. It is possible to adhere the product indication 2 specifically designed for individual customers on the battery pack 1. For printing the product indication 2 in the present embodiment, an intermediate transfer printer is used to print the product indication 2. As shown in Fig. 2A, the printer prints a reversal image of the product indication 2 on a cover film 9 of an intermediate transfer film 7. Then, the intermediate transfer film 7 is placed such that the surface for printing the reversal image is on the side of the battery pack 1. Then, a heat roller 10 heats and presses the intermediate transfer film 7 so as to retransfer the reversal image on the battery pack 1. Then, as shown in Fig. 2B, by removing a base film 8 of the intermediate transfer film 7, the product indication 2 as a normal image is printed on the battery pack 1, and the printed surface is finished such that the surface is covered with the thin cover film 9.

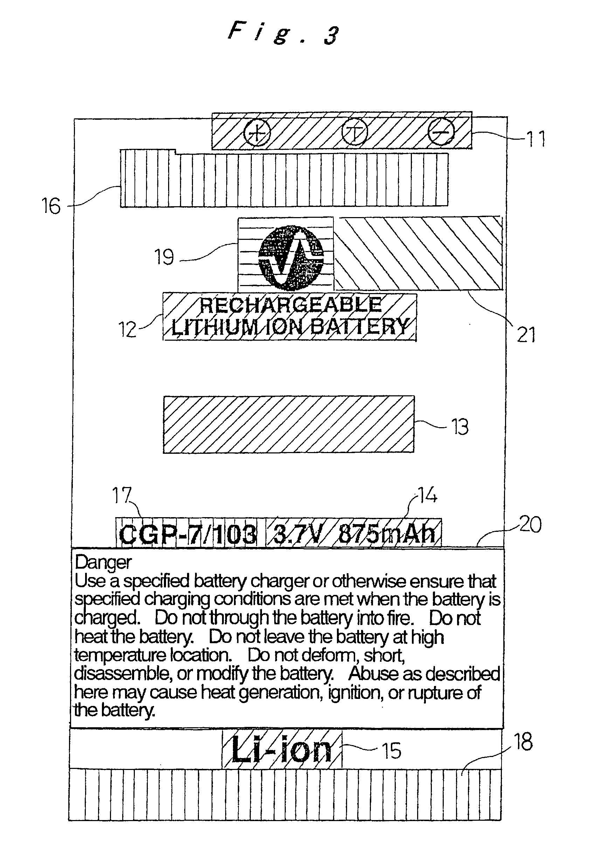

The manufacturer who is a maker of the battery pack 1 issues software for designing the product indication 2 of the battery pack 1, and provides the customer with the software. This software is constituted by a fixed part which does not allow information entry, and a design part which allows information entry as shown in Fig. 3.

As shown in Fig. 3, this software sets the shape, the dimension, and the layout of individual displays. The fixed part as a basic display indicated by a hatch sloping upward to the right includes a terminal indication 11, a battery indication 12 showing the type of the battery, a trademark indication 13 showing the trademark of the battery pack 1, a rating indication 14 showing the rating of the battery pack 1, and a battery identification indication 15 showing the class of the battery. The design part indicated by vertical lines for allowing a display specific to the customer includes a brand indication 16, a part number indication 17, and a manufacturer indication 18. Further, a customer-selectable design part indicated by horizontal lines, which the customer can leave as the basic display or can design as a specific display, includes a mark indication 19 and a notice indication 20. An obtained-standard indication part indicated by a hatch sloping upward to the left, which is used for showing an obtained standard such as UL (Underwriters Laboratories Inc.) safety standard, includes an obtained-standard indication 21.

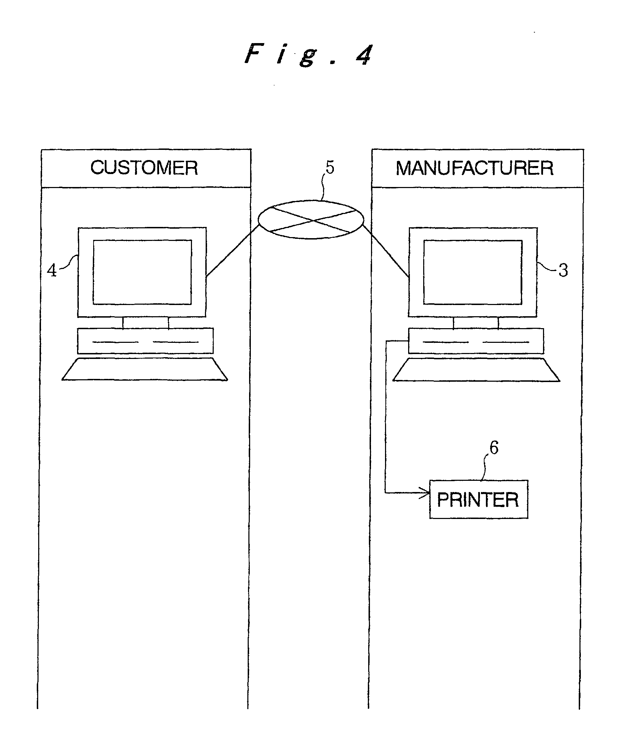

The design of the product indication 2 specific to the individual customer is conducted by computer processing on a computer 3 of the manufacturer and on a computer 4 of the customer connected with each other through the Internet (a communication network) 5 as shown in Fig. 4. The customer uses the software supplied from the manufacturer to design the product indication.

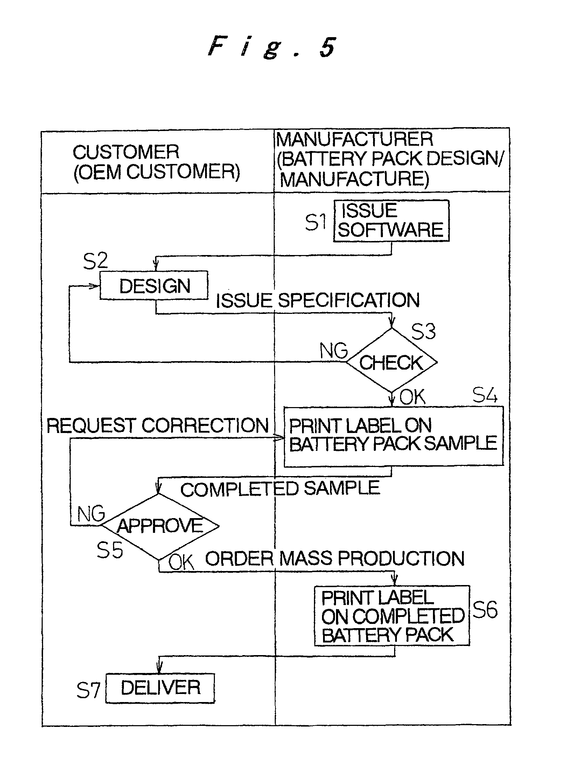

The following section describes steps from designing the product indication 2 to the delivery of the product according to a first embodiment with reference to Fig. 5. S1 to S7 in the drawing are step numbers indicating process steps, and they match numbers used in the following description.

First, the manufacturer supplies the customer with the software serving as a base for designing the product indication 2 for the battery pack 1 (S1). Though the software can be supplied from the manufacturer to the customer by hand-delivering or mailing a floppy disk, a CD-R, a DVD-RAM, or the like on which the software is recorded, the manufacturer can transmit the software to the customer as an attachment of an e-mail.

The customer uses the supplied software to design a product indication specific to the customer (S2). The design is conducted by entering information specific to the customer to the individual parts other than the fixed part in the format example shown in Fig. 3. For example, a brand logo of the manufacturer can be replaced by the brand logo of the customer on the brand indication 16. The entry operation for the individual parts is conducted easily on the computer. A designed product indication draft is transmitted to the manufacturer over the Internet 5.

As transmission methods over the Internet, it is possible to set the software program so as to encrypt and transmit only the parts which allows the entry by the customer along with their position information and the like in addition to to send the entire format of the product indication after compressing and encrypting the format for the product indication. With this method, it is possible to safely reduce the quantity to be transmitted. Also, it is possible to set the software such that the software includes reference data such as a manufacturer number, a control number, and entry operation history which only the manufacturer can use in addition to the data to be printed on the product indication such as the brand indication and the trademark indication. As specific application examples, when the part number is printed on a product indication surface, since the part number is the part number of the customer, and the part number of the manufacturer does not explicitly appear, various types of control become difficult. However the reference data are included, referring to them solves the problem.

The manufacturer reviews described content of the notice indication 20 and the like, and checks for a typographical error and lipography on the received product indication draft (S3). If the manufacturer finds a flaw, the manufacturer asks the customer for correction, or transmits the customer a draft corrected by the manufacturer over the Internet 5. When the manufacturer obtains a final product indication draft which no longer includes a flaw, the manufacturer creates a completed sample by using a label printer 6 to print the product indication as a label on the battery pack 1 (S4), and then sends the completed sample to the customer.

The customer examines the received completed sample. If there is a part to be corrected on the printed product indication, the customer sends a request for correction to the manufacturer over the Internet 5. If there is no flaw, the customer approves the product indication, and then sends a mass production order to the manufacturer over the Internet 5 and the like (S5).

When the manufacturer receives the correction request, the manufacturer corrects the product indication. At this time, since the computer of the manufacturer 3 records the latest product indication data, when the manufacturer receives the mass production order, the manufacturer uses the latest product indication data (the final product indication draft) to print the product indication 2 on the battery packs 1 (S6), and then delivers the completed battery packs 1 to the customer (S7).

With the product indication print system according to the first embodiment, since printing the label of the product indication specific to the customer on the battery pack 1 is processed by the information communication entirely over the communication network (the Internet 5) throughout the processes after the customer determines the product indication until the manufacturer delivers the battery pack 1 with the printed label except for sending the completed sample, the delivery period, the personnel cost, and the like are reduced based on quickly setting the product indication.

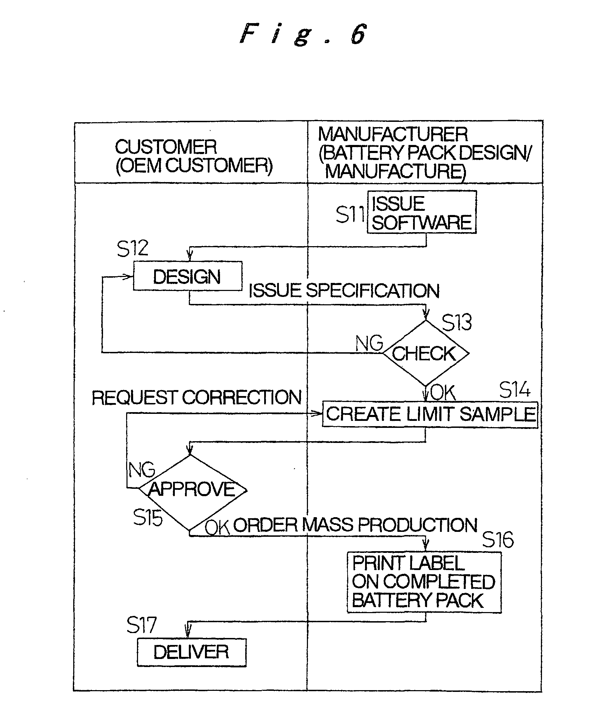

The following will describe processes from designing the product indication 2 to delivering the product according to a second embodiment with reference to Fig. 6. The same numerals are assigned to elements common to those in the first embodiment, and description for them is skipped.

The manufacturer supplies the customer with software which serves as a base for designing the product indication 2 for the battery pack 1 (S11). As in the first embodiment, though the software can be supplied from the manufacturer to the customer by hand-delivering or mailing a floppy disk, a CD-R, a DVD-RAM or the like on which a base format is recorded, the manufacturer can transmit the software to the customer as an attachment of an e-mail.

The customer uses the supplied software to design a product indication specific to the customer (S12). The design is conducted by entering information specific to the customer to the individual parts other than the fixed part in the format example shown in Fig. 3. A designed product indication draft is transmitted to the manufacturer over the Internet 5.

The manufacturer reviews the described content of the notice indication 20 and the like, and checks for a typographical error, lipography, and the like on the received product indication draft (S13). If the manufacturer finds a flaw, the manufacturer asks the customer for correction, or transmits the customer a draft corrected by the manufacturer over the Internet 5. When the manufacturer obtains a final product indication draft which no longer includes a flaw, the manufacturer creates a limit sample which sets a permissible limit of bleeding, slight touching, paint-out, a scratch, color tone irregularity, and the like of an image and a character generated when the product indication is printed as a label on the battery pack 1 with the label printer 6 (S14), and then sends the limit sample to the customer. Since the limit sample indicates the level of the permissible limit when a printed state of the label is examined, the label is printed at a high precision when the permissible limit is set to high. However, since the precision is unnecessarily high, a number of labels determined as a defective print increases uselessly, thereby decreasing the yield, resulting in an increased cost. Thus, the permissible limit is set to a level which does not cause a problem for the product indication, and then, this level is provided for the customer as the limit sample.

The following section describes an example of setting the permissible level. When the product indication is printed with the resolution of 600 dpi and 256 colors in the actual production, the limit example is created with 400 dpi and 16 colors according to the level of an expected defective print, for example. Also, the chroma, the lightness, the hue, and the like are decreased if necessary. When this sample created with the decreased precision is substituted as the limit sample which represents potential bleeding, slight touching, paint-out, a scratch, and color tone irregularity, the time required for reaching agreement between the customer and the manufacturer is reduced, and simultaneously the production presents higher yield and less print defects when actual printing is performed with the resolution higher than that of the limit sample.

Then, the customer examines the received limit example. The customer transmits a correction request to the manufacturer when the customer wants to change the permissible limit or to correct the printed product indication over the Internet 5. On the other hand, the customer approves the product indication, and transmits the mass production order to the manufacturer over the Internet 5 and the like when there is no flaw in the limit sample and the product indication (S15).

When the manufacturer receives the correction request, the manufacturer corrects the permissible limit and the product indication 2. At this time, since the computer 3 of the manufacturer records the latest product indication data, when the manufacturer receives the mass production order, the manufacturer uses the latest product indication data (the final product indication draft) to print the product indication 2 on the battery pack 1 (S16), and then delivers the completed battery packs 1 to the customer after the products with defective print are removed (S17).

The following will describe a process for removing the products with the defective print. After the label is printed, the printed product indication and the limit sample data created in advance are pattern-matched in specific areas. Based on the pattern matching, it is possible to automatically discriminate products as a product with normal print when the image matching rate is 95% or more, for example. As a result, man-hour required for the inspection is reduced. Although, as the specific areas the entire product indication may be selected, it is possible to select only the parts which the customer can arbitrarily change to reduce the inspection time. At this time, only important parts appealing brand image such as the brand indication may be selected as the representative specific areas for further reducing the time required for the inspection.

With the product indication print system according to the second embodiment, since printing the label of the product indication 2 specific to the individual customer on the battery pack 1 is processed by the information communication entirely over the communication network (the Internet 5) throughout the processes after the customer determines the product indication until the manufacturer delivers the battery pack 1 with the printed label, the delivery period, the personnel cost, and the like are reduced based on quickly setting the product indication.

In the embodiments described above, while the intermediate transfer film is used for printing the product indication on the battery pack 1, it is possible to adhere tack paper on the battery pack 1 after printing the product indication on the tack paper by arbitrary printing means, and then removing a release liner. It is also possible to adopt a method which uses non-contact print such as inkjet print to directly print on the battery pack 1.

### INDUSTRIAL APPLICABILITY

With the product indication print system of the present invention, since a series of processes from design to delivery relating to printing a product indication specific to a customer is conducted by the information exchange over a communication network, this product indication print system is effective for efficiently producing products on which the product indication specific to the individual customer is printed.

## Claims

1. A product indication print system for printing a product indication (2) presented on a surface of a product, and specific to an individual customer supplied with the product, wherein
said customer designs a product indication draft on a computer by using software prepared for designing a product indication, and supplied from a product manufacturer (S2, S12), and
said manufacture prints the product indication on the product by using a final product indication draft determined by exchanging information over a communication network (5) (S6, S16).

2. The product indication print system according to claim 1, wherein required security measure is taken for transmitting and receiving the product indication draft.

3. The product indication print system according to claim 1, wherein data corresponding to a required part of the product indication draft is received and transmitted when the draft is received and transmitted.

4. The product indication print system according to claim 1, wherein the software is supplied by transmitting the software over the communication network (5).

5. The product indication print system according to claim 1, wherein the software is supplied by recording the software on a storage medium.

6. The product indication print system according to claim 1, wherein positions, spaces, font metrics, and design rules are set in the software for a fixed part not allowing information entry, and for a design part allowing design specific to the customer.

7. The product indication print system according to claim 1, wherein the product indication (2) is printed by melt retransfer such that a reversal image of the product indication is printed on an intermediate transfer film (7), and then this image is retransferred from the intermediate transfer film to the product by a heat roller (10).

8. The product indication print system according to claim 1, wherein the product indication (2) is printed by non-contact print.

9. The product indication print system according to claim 1, wherein the product is a battery or a battery pack (1).

10. A product indication print system for printing a product indication (2) presented on a surface of a product, and specific to an individual customer supplied with the product, wherein
a manufacturer of the product supplies said customer with software prepared for designing the product indication on a computer (S1),
said customer designs a product indication draft on a computer by using said software (S2), and then transmits the product indication draft to said manufacturer over a communication network (5),
said manufacturer determines a final product indication draft by exchanging information with said customer over the communication network (S3), produces a product sample including the product indication printed by using the final product indication draft (S4), sends this product sample to said customer, obtains an approval from said customer (S5), manufactures the product on which the product indication is printed (S6), and delivers the product to said customer (S7).

11. The product indication print system according to claim 10, wherein required security measure is taken for transmitting and receiving the product indication draft.

12. The product indication print system according to claim 10, wherein data corresponding to a required part of the product indication draft is received and transmitted when the draft is received and transmitted.

13. The product indication print system according to claim 10, wherein the software is supplied by transmitting the software over the communication network (5).

14. The product indication print system according to claim 10, wherein the software is supplied by recording the software on a storage medium.

15. The product indication print system according to claim 10, wherein positions, spaces, font metrics, and design rules are set in the software for a fixed part not allowing information entry, and for a design part allowing design specific to the customer.

16. The product indication print system according to claim 10, wherein the product indication (2) is printed by melt retransfer such that a reversal image of the product indication is printed on an intermediate transfer film (7), and then this image is retransferred from the intermediate transfer film to the product by a heat roller (10).

17. The product indication print system according to claim 10, wherein the product indication (2) is printed by non-contact print.

18. The product indication print system according to claim 10, wherein the product is a battery or a battery pack (1).

19. A product indication print system for printing a product indication (2) presented on a surface of a product, and specific to an individual customer supplied with the product, wherein
a manufacturer of the product supplies said customer with software prepared for designing the product indication on a computer (S11),
said customer designs a product indication draft on a computer by using said software (S12), and then transmits the product indication draft to said manufacturer over a communication network (5),
said manufacturer determines a final product indication draft by exchanging information with said customer over the communication network (S13), produces a limit sample of a state printed by using the final product indication draft (S14), sends this limit sample to said customer, receives an approval from said customer (S15), manufactures the product on which the product indication is printed (S16), and delivers the product to said customer (S17).

20. The product indication print system according to claim 19, wherein the limit sample is transmitted by transmitting limit sample data over the communication network (5).

21. The product indication print system according to claim 19, wherein required security measure is taken for transmitting and receiving the product indication draft.

22. The product indication print system according to claim 19, wherein data corresponding to a required part of the product indication draft is received and transmitted when the draft is received and transmitted.

23. The product indication print system according to claim 19, wherein the software is supplied by transmitting the software over the communication network (5).

24. The product indication print system according to claim 19, wherein the software is supplied by recording the software on a storage medium.

25. The product indication print system according to claim 19, wherein positions, spaces, font metrics, and design rules are set in the software for a fixed part not allowing information entry, and for a design part allowing design specific to the customer.

26. The product indication print system according to claim 19, wherein the product indication (2) is printed by melt retransfer such that a reversal image of the product indication is printed on an intermediate transfer film (7), and then this image is retransferred from the intermediate transfer film to the product by a heat roller (10).

27. The product indication print system according to claim 19, wherein the product indication (2) is printed by non-contact print.

28. The product indication print system according to claim 19, wherein the product is a battery or a battery pack (1).
